# FASCICULE DE BREVET EUROPEEN

(11) **EP 0 626 802 B1**
(45) Date de publication et mention de la délivrance du brevet: **05.03.1997**
(21) Numéro de dépôt: 94903807.9
(22) Date de dépôt: 16.12.1993
(51) Int. Cl.: A01G 1/04

(54) **SUBSTRAT LIGNO-CELLULOSIQUE POUR LA CULTURE DE CHAMPIGNONS SAPROPHYTES**
HOLZCELLULOSE ENTHALTENDES SUBSTRAT FÜR DIE ZUCHT VON SAPROPHYTISCHEN PILZEN
LIGNOCELLULOSE SUBSTRATE FOR GROWING SAPROPHYTIC FUNGI

(30) Priorité: 22.12.1992 CH 3909/92
(43) Date de publication de la demande: 07.12.1994
(73) Titulaire: ROMANENS, Patrick, CH-8053 Zürich (CH)
(72) Inventeur: ROMANENS, Patrick, CH-8053 Zürich (CH)
(74) Mandataire: Moinas, Michel
(86) Numéro de dépôt international: EP9303578
(87) Numéro de publication internationale: WO9414313

(56) Documents cités:
- EP-A- 0 387 233
- WO-A-85/00002
- BE-A- 904 994
- CH-A- 392 141
- DATABASE WPI Week 9003, Derwent Publications Ltd., London, GB; AN 90-018070 & JP,A,1 296 922 (NIPPON HIRYO) 30 Novembre 1989
- DATABASE WPI Week 7822, Derwent Publications Ltd., London, GB; AN 78-39555 & JP,A,53 044 684 (ONO PHARMACEUTICAL) 21 Avril 1978

## Description

La présente invention se rapporte à un substrat pour la culture d'espèces de champignons saprophytes, vivant sur des substrats ligno-cellulosiques, tels que les champignons des genres *Lentinus, Pleurotus*, *Schyzophyllum*, *Agrocybe*, *Tremella*, *Auricularia*, *Flammulina*, *Volvariella*, etc.. L'invention se rapporte également à un procédé pour la préparation d'un tel substrat par pasteurisation, ainsi qu'à un procédé pour l'incubation du substrat par le blanc (le mycélium) de champignon.

Certains champignons de la cuisine asiatique suscitent de nos jours un réel engouement de la part des palais occidentaux. Il en va ainsi par exemple du *Lentinus edodes* ou shii-take, souvent appelé champignon chinois ou champignon parfumé du Japon. Pour ce champignon, comme pour d'autres d'ailleurs, tels les pleurotes et les pholiotes, on aimerait bien ne plus être pour l'essentiel tributaire des caprices de la nature et, comme cela a été fait pour le champignon de Paris (*Agaricus bisporus*) devenu champignon de "couche", substituer à la collecte une production de type agricole. Le shii-take (*Lentinus edodes*), ainsi que les espèces apparentées (pleurotes, pholiotes, etc...) vivant sur substrats ligno-cellulosiques n'ont, contrairement aux champignons de couches, qu'un système immunitaire rudimentaire pour concurrencer les moisissures en général, surtout celles appartenant aux groupes *Trichoderma*, *Mucor*, *Penicillium*.

C'est pourquoi la culture de tels champignons nécessite, dans l'état actuel des connaissances, un substrat et des conditions stériles, et nombreux sont les procédés décrits dans la littérature travaillant à partir de substrats stérilisés. D'une façon générale, le substrat stérilisé de départ se présente sous forme de bois lardé rassemblé sous forme de blocs relativement petits, typiquement de 3 à 5 kg. Ces blocs sont généralement contenus dans des sacs de plastique, qui rendent le stockage et la manutention relativement difficiles. Ce type de procédé conduit à des coûts de production onéreux, vu la relative petitesse des blocs de substrat traités et le cout important de la stérilisation de ce substrat.

Quelques procédés ont été décrits pour la culture du shii-take, qui mettent en oeuvre des substrats seulement pasteurisés, par exemple celui décrit dans le brevet US-4 874 419. Cependant, le substrat pasteurisé en question doit être spécialement traité, préalablement à l'incubation avec le blanc de shii-take, par digestion à l'aide de microorganismes endogènes, c'est-à-dire de bactéries (typiquement des Actinomycètes) et les moisissures qui sont naturellement présents sur le matériau végétatif. Apparemment, il s'agit "d'occuper le terrain", c'est-à-dire de partir d'un substrat dans lequel ces bactéries et moisissures sont suffisamment nombreuses pour empêcher l'implantation ultérieure des moisissures néfastes citées précédemment (*Trichoderma*, *Mucor*, *Penicillium*). Quoi qu'il en soit, ce procédé est lui aussi coûteux, puisqu'il faut prévoir une étape supplémentaire de prédigestion du substrat, qui s'ajoute à la pasteurisation.

Les problèmes posés en travaillant à partir de substrats simplement pasteurisés et non stérilisés sont d'ailleurs évoqués dans un article récent intitulé "Situation de la production du shii-take (*Lentinus edodes*)" de J. Laborde du 10 juin 1991,, auquel on se référera avec intérêt (p. 177 à 179). Il faut retenir de cet article très complet que "...le traitement thermique (de pasteurisation) est toujours complété par l'apport au milieu d'un fongicide efficace contre les *Trichoderma*, en l'occurrence du Benomyl ...". Et il est précisé plus loin que "....avec les milieux pasteurisés, on est tributaire d'un fongicide...". L'utilisation d'un fongicide, du Benomyl ou Benlate R, est d'ailleurs confirmé dans un article de P. Delpech et J.M. Olivier intitulé "Champignon parfumé (ou shii-take)", Bulletin de la Fédération nationale des syndicats agricoles de cultivateurs de champignons, FNSACC-FNPT, Nouvelle Série n° 46, avril-mai-juin 1990, p.94.

La présente invention va à l'encontre de ces idées reçues, puisqu'elle concerne un substrat pasteurisé, et non stérilisé, qui permet la culture du shii-take et des autres genres de champignons cités plus haut avec d'excellents rendements, en l'absence de tout fongicide. C'est la sélection rigoureuse au niveau du choix du substrat, de sa nature et de sa granulométrie, des substances qui y sont ajoutés et d'autres paramètres comme le lardage, qui autorisent ce résultat.

Le substrat selon l'invention est un substrat ligno-cellulosique à base de bois lardé, pasteurisé mais non stérilisé, dont la granulométrie est à 70 % au moins comprise entre 0,5 et 2 cm, qui contient de la farine de lin et du bicarbonate de sodium et est exempt de fongicide. Le bois est du bois vert et frais composé à 90 % au moins de bois de feuillus et n'a de préférence pas subi de traitement aux pesticides.

La granulométrie est un critère important pour assurer une bonne respiration du substrat, puisque, contrairement aux procédés traditionnels, on peut travailler sur des gros blocs, par exemple de l'ordre de 15 kg.

De préférence, le taux d'humidité du substrat est compris entre 55 et 65 % , alors que par exemple le procédé décrit dans l'exposé WO-85/00002, qui est un autre procédé utilisant un substrat pasteurisé, travaille avec des taux d'humidité beaucoup plus élevés, typiquement autour de 85 %. On remarquera aussi que le substrat mentionné dans cet exposé comprend de la tourbe, alors que selon la présente invention, la matière ligno-cellulosique de base est constituée de bois de feuillus à au moins 90 %.

Le taux d'humidité du substrat est une façon d'exprimer sa capacité à retenir l'eau, qui est en réalité le véritable critère.

En outre, cette même référence WO-85/00002 préconise un pH inférieur à 5 et précise que, plus on abaisse le pH, plus on peut travailler avec une température de pasteurisation basse. De surcroit, cette importance qu'il conviendrait d'attribuer au pH est confirmée dans un article de E.R. Badham, Mycologia 83(4), 1991, p. 455-463 (voir p. 462, 2ème colonne), ainsi que dans un autre article de Y.H. Han et al. Mushroom Science, XI Proceedings of the Eleventh International Scientific Congress on the Cultivation of Edible Fungi, Australia, 1981, p. 644 and 647).

Là aussi, l'invention va donc à l'encontre des enseignements qu'on peut tirer de la littérature, puisque selon l'invention la culture des champignons peut être réalisée avec de bons rendements à l'aide de substrats ayant un pH au-dessus de 5. Selon l'invention, le pH préféré est d'ailleurs compris entre 5 et 7.

Comme indiqué plus haut, le substrat comprend également de la farine de lin, avantageusement à raison de 3 à 18 % sur matières sèches totales, ainsi que du bicarbonate de sodium dont un des rôles est de permettre l'ajustement du pH. Le bois utilisé doit être un bois vert, provenant directement de la forêt et n'ayant de préférence suivi aucun traitement aux pesticides. Ce bois est composé à 90 % de bois de feuillus, en particulier du bouleau, du vergne ou aulne, du chêne, du hêtre, de l'érable, du peuplier du frêne ou du châtaignier.

On a constaté en effet que le bois de conifère, par la résine qu'il contient, a un effet néfaste sur la croissance.

Sans qu'on en connaisse la raison exacte, on a pu constater que l'apport de farine de lin permet d'obtenir des rendements de culture supérieurs de 30 à 70 % à ceux obtenus si on utilise de la farine de maïs seule, en mêmes quantités au total. Ce n'est pas la présence éventuelle d'acide linoléïque (C_{18:2}) qui puisse avoir une influence déterminante, comme indiqué par C.H. Song, K.Y. Cho, N.G. Nair et J. Vine, Mycologia 81(4), 1989, p. 514 à 522 [voir plus particulièrement le graphique de la p. 517, ainsi que la discussion en p.521 où il est indiqué que "..."C_{18:2} n'a pas d'effet stimulant sur la croissance de *Lentinus edodes*"]

Pourquoi du bois frais, c'est-à-dire en provenance direct de la forêt ? C'est qu'on a constaté que de la fraîcheur du bois dépend la vitesse de croissance des champignons. En effet, plus l'âge du bois utilisé est grand (plus la période de stockage du bois est longue), plus la croissance du mycélium est ralentie.

Le taux de lardage du bois reste un facteur influent, mais de moindre importance que dans les procédés connus. On obtient ainsi de bonnes productions de champignons en utilisant pour le bois un taux de lardage aussi bas que 2 %.

Il est bien sûr possible d'obtenir des champignons avec de bons rendements si on part de substrats pasteurisés, mais peu infectés avant la pasteurisation. Comme l'indique cependant E.R. Badham dans un autre article, Mush. J. Tropics, 1988, 8 p. 129-136, "le substrat ne doit pas être trop infecté avant la pasteurisation". Selon l'invention au contraire, grâce à une combinaison judicieuse de divers paramètres, le degré d'infection du substrat avant pasteurisation n'a guère d'importance.

Le substrat selon l'invention présente avantageusement une composition comme suit, exprimée en parties pondérales sur matières sèches totales :

| | |
|---|---|
| - Bois | 65 à 85 |
| - Farine de maïs | 8 à 15 |
| - Farine de lin | 3 à 18 |
| - Bicarbonate de sodium | 0,03 à 0,2 |
| - Carbonate de calcium | 0 à 4 |
| - Fongicides | 0 |

par exemple, les compositions suivantes, toujours en parties pondérales sur matières sèches totales :

| | |
|---|---|
| - Bois | 80,70 |
| - Farine de maïs | 11,25 |
| - Farine de lin | 3 à 12 |
| - Bicarbonate de sodium | 0,05 |
| - Carbonate de calcium | 2,50 |
| - Fongicides | 0 |

Selon l'invention, le substrat est avantageusement pasteurisé à une température comprise entre 70 et 100°C pendant une à trois heures, par injection de vapeur. Avantageusement toujours, le substrat pasteurisé est refroidi en milieu stérile de façon contrôlée, par exemple pour être à 25°C après 24 heures, mais il peut tout aussi bien être refroidi rapidement.

Une installation pour la mise en oeuvre du procédé comprend une unité de mélange avantageusement maintenue sous air stérile, une unité d'injection de vapeur permettant de pasteuriser le substrat et une unité de transport du substrat pasteurisé vers une unité de remplissage des conteneurs d'incubation. En effet, les substrats pasteurisés sont incubés avec du blanc de champignon, à raison de 1 à 5 %, de préférence dans des containers prévus à cet effet, et non dans des sacs de plastique. Ces containers d'une grande contenance, par exemple de 30 à 60 litres, doivent permettre les échanges gazeux avec l'atmosphère tout en empêchant la pénétration des moisissures extérieures à l'intérieur du conteneur. L'incubation a lieu en maintenant la température entre 24 et 30°C environ, de préférence de 6 à 12 semaines dans une salle séparée où la température et le taux d'humidité sont contrôlés.

Les conteneurs d'incubation peuvent être des récipients métalliques ou en matériau plastique à col ouvert, dont l'obturation est réalisée par une éponge ou analogue. L'éponge permet les échanges gazeux tout en empêchant la pénétration des moisissures tant redoutées.

La substitution de conteneurs spéciaux aux sacs couramment utilisés est la seule concession à la tradition. En effet, pasteuriser au lieu de stériliser ne modifie en rien la nature, ni la séquence des opérations. De la sorte, l'éleveur de champignons n'a pas à modifier ses habitudes. Cependant, le fait qu'on utilise des conteneurs de 30 à 60 litres au lieu de sacs de 3 à 5 kg permet d'augmenter fortement la productivité.

Le substrat selon l'invention, mis en oeuvre dans les conditions décrites ci-dessus, permet d'obtenir des rendements élevés et surtout réguliers, de l'ordre de 70 à 100 kg de champignon (carpophores ou chapeaux et pieds, parties comestibles) pour 100 kg de matières sèches de substrat, valeurs relatives au shii-take. Sur la base d'un substrat ayant classiquement un taux de matières sèches de 40 %, cela correspond à des rendements compris entre 28 et 40 % en poids de substrat frais. Habituellement, ces quantités sont obtenues en plusieurs récoltes ou volées successives, jusqu'à 4 ou 5 volées, sur les mêmes blocs de substrat.

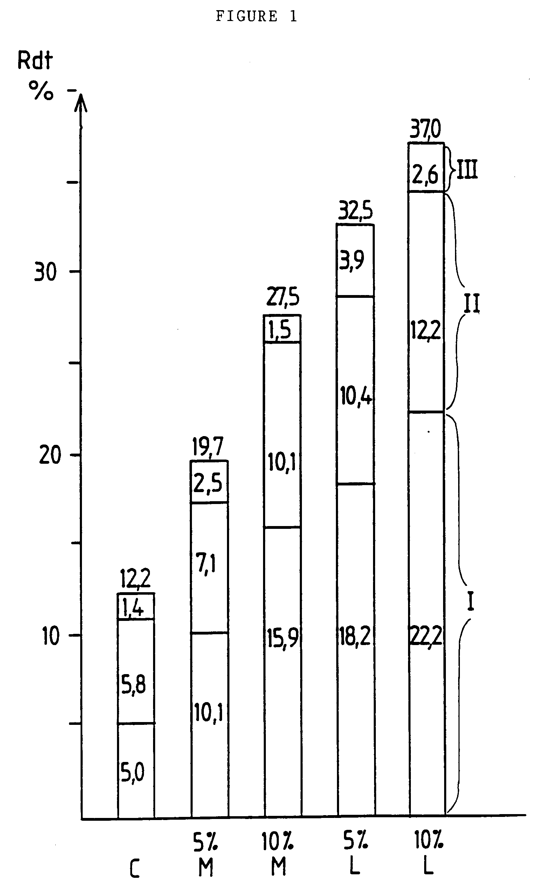

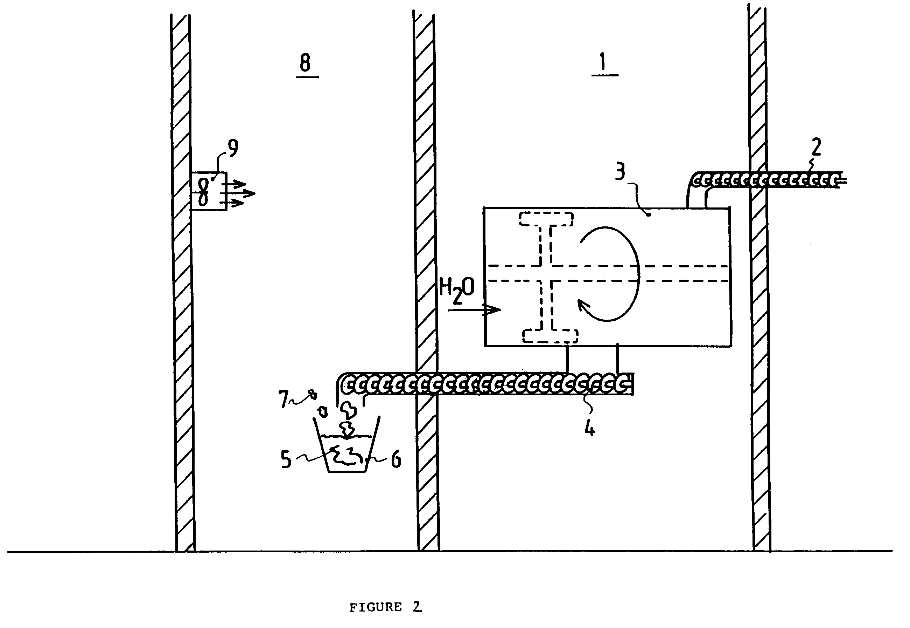

L'invention sera mieux comprise en relation avec le dessin et les exemples annexés, donnés à titre d'exemples non limitatifs.

### Exemples

On procède à la culture de shii-take par un procédé qui peut être décomposé en sept étapes : mélange, pasteurisation, refroidissement, inoculation, incubation, immersion et culture.

Le mélange est l'étape qui consiste à préparer un substrat, comme indiqué ci-dessous en parties de matières sèches et à 60 % d'humidité selon la nature des bois utilisés

| | |
|---|---|
| - Bois de feuillus (selon ex.) | 80,70 |
| - Farine de maïs | 11,25 |
| - Farine de lin (selon ex.) | 5 à 10 |
| - Bicarbonate de sodium | pour pH |
| - Carbonate de calcium | 2,50 |

en mélangeant le bois vert et frais aux autres substances mentionnées et en homogénéisant le tout, si possible assez rapidement, par exemple en moins d'une heure. On travaille de préférence sous air stérile, ce qui implique que le mélangeur utilisé soit étanche. En outre, au stade du mélange on peut commencer déjà l'injection de vapeur en vue de la pasteurisation.

L'étape de pasteurisation est réalisée à une température comprise entre 70 et 100°C pendant 1 à 3 heures selon la nature des bois utilisés également. On la réalise en continu, par injection de vapeur dans une vis transporteuse qui véhicule le substrat et aussi par injection de vapeur dans le mélangeur comme indiqué ci-dessus.

La pasteurisation est par exemple réalisée dans l'installation schématisée au dessin, figure unique.

On voit sur la figure une unité de pasteurisation 3 à la vapeur, placée dans une salle 1 et alimenté en substrat par une vis sans fin 2. Le substrat pasteurisé est repris au sortir de l'unité de pasteurisation 3 par une vis sans fin 4 qui, quittant la salle 1, aboutit dans une salle 8 maintenue sous air stérile filtré au moyen de l'entrée 9. Dans cette salle 8 est réalisé la mise en bidons 6 de charges de substrat pasteurisé et refroidi 5, puis l'ensemencement par le blanc 7 de champignon.

L'étape de refroidissement est celle qui permet au substrat pasteurisé de voir sa température ramenée autour de 25°C, si possible sur une durée de 24 heures au moins.

L'étape d'inoculation est celle dans laquelle le blanc de champignon est incorporé dans le substrat pasteurisé, à raison de 2,5 à 12,5 % en poids sur matières sèches. On la réalise dans la vis transporteuse décrite ci-dessus ou à la sortie de celle-ci. Le taux de lardage, exprimé en % de poids frais de substrat est de 1 à 5 %.

L'étape d'incubation est réalisé dans les conteneurs décrits plus haut, ayant la forme de bidons, qui sont alimentés en substrat inoculé par la vis transporteuse, puis fermés chacun par une éponge. Les conteneurs sont alors transportés dans une salle d'incubation, où la température est maintenue entre 24 et 30°C, l'incubation durant de 6 à 12 semaines.

La durée d'incubation a une influence à la fois sur le rendement et sur la taille des champignons obtenus en première volée. Ainsi en passant d'une durée d'incubation de 6 à 9 puis à 13 semaines, le rendement va croissant, de 10 à 13, puis à 15 en valeur relative, tandis que la taille des champignons obtenus va en diminuant et passe, toujours en valeur relative, de 10 à 8, puis à 5. On peut ainsi sélectionner la taille des champignons en fonction des demandes du marché.

En revanche, pour les volées suivantes, 2ème et 3ème volée par exemple, la durée d'incubation n'a plus d'influence marquante sur la taille des champignons obtenus.

L'immersion est une technique qui consiste, si nécessaire, à immerger le substrat dans l'eau, de façon à remonter son taux d'humidité près de la saturation. On peut réaliser cette version en recouvrant d'eau le substrat présent dans les bidons pendant 24 heures environ, par exemple avant la mise en culture et entre les volées lorsque le substrat est desséché.

La dernière étape est celle de la culture proprement dite, qui se fait de façon traditionnelle, dans une salle rudimentaire dont l'humidité peut être maintenue entre 80 et 90 %, la température entre 15 et 23°C, sous une luminosité supérieure à 200 lux.

On comprendra aisément que le procédé de culture peut être mis en oeuvre en continu, ce qui d'un grand intérêt par rapport aux procédés traditionnels existants. La seule contrainte est bien entendu de respecter les paramètres, notamment les paramètres de température, indiqués plus haut.

Le tableau I ci-annexé résume les influences constatées sur les rendements en shii-take en fonction de la nature du substrat, en particulier de la nature de la farine ajoutée. Ces rendements Rdt sont exprimés en % pondéraux, c'est-à-dire en g de champignon frais obtenu par g de substrat, et sont donnés sur 3 volées avec les rendements cumulés en haut de colonnes. "C" signifie "contrôle" (sans farine de maïs ni de lin), "%M" signifie "% pondéraux de farine de maïs ajoutée" et "%L" signifie "% pondéraux de farine de lin ajoutée". Le substrat était à base de bois frais de hêtre, frêne et érable, sans pesticide, lardé à 3 % du poids frais, ayant une granulométrie moyenne de 1,5 cm, les autres paramètres et compositions étant celles décrites plus haut.

On constate que les rendements obtenus sont, quelques soient les volées et donc au total, très nettement supérieur avec la farine de lin, aussi bien à 5 % qu'à 10 %.

Le tableau II ci-après résume les influences constatées sur les rendements en shii-take, en faisant varier les espèces de bois, l'âge de celui-ci et le pH, la colonne "résultats" exprimant la croissance mycélienne mesurée en mm après 10 jours de croissance. "Mélange" signifie le mélange des trois essences d'arbre citées plus haut, en proportions 40/40/20.

**Tableau II**

| **Substrats** | **Age/semaines** | **pH** | **Résultats** |
|---|---|---|---|
| Erable | 1 | 5,0-6,0 | 37,3 |
| Hêtre | 1 | 5,0-6,0 | 38,4 |
| Frêne | 1 | 5,0-6,0 | 36,7 |
| Mélange | 1 | 6,8 | 33,0 |
| Mélange | 1 | 5,0-6,0 | 39,2 |
| Mélange | 6 | 7 | 32,2 |
| Mélange | 12 | 7 | 24,9 |

On constate immédiatement que la nature du feuillu en cause ne semble pas avoir une grande importance ; qu'en revanche l'âge du bois est un facteur primordial, les rendements chutant rapidement dès que le bois a un tant soit peu vieille ; et qu'un pH entre 5 et 6 donne de meilleurs résultats qu'un pH plus élevé, un pH de 6,8 (proche du pH=7 de neutralité donnant encore des rendements acceptables.

## Revendications

1. Substrat ligno-cellulosique à base de bois lardé pour la culture de champignons saprophytes, le substrat étant un substrat pasteurisé, mais non stérilisé, caractérisé en ce que sa granulométrie est à 70 % au moins comprise entre 0,5 et 2 cm, qu'il contient de la farine de lin et du bicarbonate de sodium et est exempt de fongicide, et en ce que le bois est du bois vert et frais composé à 90 % au moins de bois de feuillus.

2. Substrat selon la revendication 1, caractérisé en ce que le bois n'a pas subi de traitement aux pesticides.

3. Substrat selon la revendication 1, caractérisé par un taux d'humidité compris entre 55 % et 65 %.

4. Substrat selon la revendication 1, caractérisé par un pH compris entre 5 et 7.

5. Substrat selon la revendication 1, caractérisé en ce qu'il contient de la farine de lin à raison de 3 % à 18 % sur matières sèches totales.

6. Substrat selon la revendication 1, caractérisé en ce que le bois est choisi dans le groupe comprenant le bois de bouleau, de vergne ou aulne, de chêne, de hêtre, d'érable, de peuplier, de frêne et de châtaignier.

7. Procédé de préparation du substrat selon l'une des revendications 1 à 6, caractérisé en ce que le mélange brut constituant le substrat de départ est pasteurisé à une température comprise entre 70 et 100°C pendant 1 à 3 heures, par injection de vapeur.

8. Procédé selon la revendication 7, caractérisé en ce que le substrat pasteurisé est refroidi en milieu stérile de façon à atteindre 25°C après 24 heures.

9. Procédé de culture de champignons saprophytes, caractérisé en ce qu'on inocule le substrat selon l'une des revendications 1 à 6 par du blanc de champignon à raison de 2,5 à 12,5 % sur matières sèches totales, puis qu'on incube le substrat inoculé en maintenant la température entre 24 et 30°C, et qu'enfin on met en culture.

10. Procédé selon la revendication 9, caractérisé en ce que l'inoculation a lieu en salle stérile et que l'incubation se déroule pendant 6 à 12 semaines, dans une salle séparée où la température et le taux d'humidité sont contrôlés.

## Claims

1. A wood-based cellulose substrate based on stabbed wood for the cultivation of saprophytic fungi, which is a pasteurized but non-sterilized substrate, characterized in that : its granulometry for at least 70% of its content is comprised between 0.5 and 2 cm; it contains linseed meal and sodium bicarbonate and is devoid of fungicide; and the wood is green wood composed of at least 90% of wood from deciduous trees.

2. The substrate according to claim 1, characterized in that the wood has not been submitted to pesticidal treatment.

3. The substrate according to claim 1, characterized by having a humidity comprised between 55% and 65%.

4. The substrate according to claim 1, characterized by having a pH comprised between 5 and 7.

5. The substrate according to claim 1, characterized in that it contains linseed meal in an amount of 3% to 18% based on the total content of dry materials.

6. The substrate according to claim 1, characterized in that the wood is selected from the group comprising birch, alder, oak, beech, maple, poplar, ash and chestnut wood.

7. A method for preparing a substrate according to any one of claims 1 to 6, characterized in that an untreated mixture constituting the precursor of the substrate is pasteurized at a temperature comprised between 70 and 100° C for 1 to 3 hours by steam injection.

8. The method according to claim 7, characterized in that the pasteurized substrate is cooled in a sterile medium in such a way as to reach 25°C after 24 hours.

9. A method of cultivating saprophytic fungi, characterized in that the substrate according to any one of claims 1 to 6 in inoculated with fungal spawn in an amount of 2.5 to 12.5% of the total dry material, followed by incubating the inoculated substrate while maintaining it at a temperature between 24 and 30°C, and lastly allowing cultivation to proceed.

10. The method of claim 9, characterized in that the inoculation takes place in a sterile room and incubation takes place during 6 to 12 weeks in a room under controlled temperature and humidity.

## Patentansprüche

1. Holzzellulose-Substrat auf der Basis von gebohrtem Holz für die Kultivierung saprophytischer Pilze, wobei das Substrat ein pasteurisiertes, jedoch nicht sterilisiertes Substrat ist, dadurch gekennzeichnet, daß seine Korngröße zu mindestens 70% zwischen 0,5 und 2 cm liegt, daß es Leinmehl und Natriumbicarbonat enthält und fungizidfrei ist und daß das Holz im Saft stehendes und frisches Holz ist, das zu mindestens 90% aus Laubholz besteht.

2. Substrat nach Anspruch 1, dadurch gekennzeichnet, daß das Holz keine Pestizidbehandlung erfahren hat.

3. Substrat nach Anspruch 1, gekennzeichnet durch einen Feuchtigkeitsgehalt zwischen 55% und 65%.

4. Substrat nach Anspruch 1, gekennzeichnet durch einen pH-Wert zwischen 5 und 7.

5. Substrat nach Anspruch 1, dadurch gekennzeichnet, daß es Leinmehl im Verhältnis von 3% bis 18% der Gesamttrockenmasse enthält.

6. Substrat nach Anspruch 1, dadurch gekennzeichnet, daß das Holz aus der Gruppe gewählt wird, die Birken-, Erlen-, Eichen-, Buchen-, Ahorn-, Pappel-, Eschen- und Kastanienholz umfaßt.

7. Verfahren zur Herstellung des Substrats nach einem der Ansprüche 1 bis 6, dadurch gekennzeichnet, daß die Rohmischung, die das Ausgangssubstrat bildet, 1 bis 3 Stunden lang bei einer Temperatur zwischen 70 und 100°C durch Einpressen von Dampf pasteurisiert wird.

8. Verfahren nach Anspruch 7, dadurch gekennzeichnet, daß das pasteurisierte Substrat in sterilem Milieu so abgekühlt wird, daß es nach 24 Stunden 25°C erreicht.

9. Verfahren zur Kultivierung von saprophytischen Pilzen, dadurch gekennzeichnet, daß das Substrat nach einem der Ansprüche 1 bis 6 im Verhältnis von 2,5 bis 12,5% der Gesamttrockenmasse mit dem Pilzmyzel beimpft wird, das beimpfte Substrat dann inkubiert wird, wobei die Temperatur zwischen 24 und 30°C gehalten wird, und schließlich in Kultur gebracht wird.

10. Verfahren nach Anspruch 9, dadurch gekennzeichnet, daß das Beimpfen in einem sterilen Raum stattfindet und daß die Inkubation während 6 bis 12 Wochen in einem gesonderten Raum erfolgt, in dem die Temperatur und der Feuchtigkeitsgehalt kontrolliert werden.
